# EUROPÄISCHE PATENTSCHRIFT

(11) **EP 3 323 662 B1**
(45) Veröffentlichungstag und Bekanntmachung des Hinweises auf die Patenterteilung: **10.07.2024**
(21) Anmeldenummer: 17184666.0
(22) Anmeldetag: 03.08.2017
(51) Int. Cl.: B60L 7/26, B60L 15/20, B60W 10/08, B60W 10/184, B60W 30/18, B60W 50/08

(54) **VERFAHREN ZUM BETREIBEN EINES KRAFTFAHRZEUGS UND KRAFTFAHRZEUG**
METHOD FOR OPERATING A MOTOR VEHICLE AND MOTOR VEHICLE
PROCÉDÉ DE FONCTIONNEMENT D'UN VÉHICULE AUTOMOBILE ET VÉHICULE AUTOMOBILE

(30) Priorität: 18.11.2016 DE 102016222827
(43) Veröffentlichungstag der Anmeldung: 23.05.2018
(73) Patentinhaber: AUDI AG, 85045 Ingolstadt (DE)
(72) Erfinder: Weinzierl, Stefan, 85092 Kösching (DE); Geuß, Matthias, 96149 Breitengüßbach (DE); Dreher, Dominik, 85049 Ingolstadt (DE); Ackermann, Michael, 85049 Ingolstadt (DE)

(56) Entgegenhaltungen:
- EP-A1- 3 132 966
- EP-B1- 2 675 677
- DE-A1- 10 049 567
- DE-A1- 102013 110 346
- US-A1- 2008 255 716
- US-A1- 2011 307 130

## Beschreibung

Die Erfindung betrifft ein Verfahren zum Betreiben eines Kraftfahrzeugs, bei welchem wenigstens eine zum Antreiben des Kraftfahrzeugs ausgebildete elektrische Maschine zum Rekuperieren von elektrischer Energie genutzt wird. Hierbei wird eine Fahrt des Kraftfahrzeugs während eines bevorstehenden Zeitraums berücksichtigt. Des Weiteren betrifft die Erfindung ein zur Durchführung des Verfahrens ausgebildetes Kraftfahrzeug.

Die US 2008/255716 A1 beschreibt ein Verfahren, bei welchem während einer Bergabfahrt eines elektrisch angetriebenen Fahrzeugs eine Rückgewinnung von Energie mittels eines Motors/Generators im Vergleich zu einer Fahrt auf ebener Straße begrenzt wird. Um ein Gefälle der Straße zu ermitteln, auf welcher das Fahrzeug fährt, kann ein Sensor verwendet werden, oder eine Steuereinrichtung empfängt Höhendaten von Punkten auf einer Karte von einem Navigationssystem des Fahrzeugs, um das Gefälle der Straße zu erfassen oder vorherzusagen.

Die EP 2 675 677 B1 beschreibt ein Verfahren zur Steuerung des Rekuperationsverhaltens in einem Kraftfahrzeug mit einem Hybridantrieb oder einem Elektroantrieb, wobei ein Grundwert eines zur Rekuperation zu nutzenden Rekuperationsmoments mittels eines Bedienelements einstellbar ist. Die Einstellung des Grundwerts erfolgt mit der Einstellung eines Betriebsmodus des Kraftfahrzeugs in Form eines sportlichen Modus, eines Komfort-Modus, eines Normalmodus und eines energiesparenden Modus.

Die DE 10 2010 063 358 A1 beschreibt ein Verfahren zum Bestimmen einer Leistungsreserve eines elektrischen Antriebs eines Kraftfahrzeugs. Hierbei wird eine Leistungsgrenze auf der Grundlage einer thermischen Belastungsgrenze des elektrischen Antriebs bestimmt. Es kann vorgesehen sein, dass ein angefordertes Drehmoment nicht bereitgestellt wird, sofern die Leistungsgrenze nach Ablauf einer vordefinierten Zeitspanne erreicht werden wird. Es kann auch die Leistungsgrenze des elektrischen Antriebs im generatorischen Modus bestimmt werden. Wenn ein zusätzlich angefordertes Drehmoment für einen vordefinierten Zeitraum im Hinblick auf die Leistungsreserve nicht zur Verfügung gestellt werden kann, wird dem Fahrer über Anzeigemittel ein entsprechendes Signal gegeben.

Die US 2016/0137185 A1 beschreibt ein Hybridfahrzeug, bei welchem ein elektromotorischer Fahrbetrieb oder ein verbrennungsmotorischer Fahrbetrieb für vorausliegende Streckenabschnitte geplant und davon abhängig eingestellt wird, ob sich das Hybridfahrzeug in dem jeweiligen Streckenabschnitt auf einer Bergstraße, in einem städtischen Gebiet oder auf einer Autobahn befindet. Des Weiteren wird die Temperatur einer Batterie des Hybridfahrzeugs bei der Entscheidung berücksichtigt, ob ein Umschalten zwischen dem elektromotorischen Fahrbetrieb und dem verbrennungsmotorischen Fahrbetrieb erlaubt ist. Die Temperatur der Batterie wird auch bei der Entscheidung berücksichtigt, ob ein Betrieb des Elektromotors als Generator zum Rückgewinnen von elektrischer Leistung während des Bremsens zugelassen wird.

Aus dem Stand der Technik ist es des Weiteren bekannt, im Falle des Verzögerns eines Kraftfahrzeugs eine zum Antreiben des Kraftfahrzeugs ausgebildete elektrische Maschine als Generator zu nutzen und so elektrische Energie rückzugewinnen beziehungsweise zu rekuperieren, indem die Bewegungsenergie des Kraftfahrzeugs in elektrische Energie gewandelt wird. Derzeit wird hierbei auf den Verzögerungswunsch eines Fahrers des Kraftfahrzeugs geachtet sowie auf den aktuellen Fahrzustand, also beispielsweise die Geschwindigkeit und die Querbeschleunigung. Des Weiteren wird der aktuelle Zustand des Triebstrangs berücksichtigt, etwa indem auf eine Momentenbegrenzung der als Generator genutzten elektrischen Maschine geachtet wird. Das angeforderte Verzögerungsmoment kann dann beispielsweise auf die elektrische Maschine des Kraftfahrzeugs und die Betriebsbremse oder Reibbremse aufgeteilt werden.

Der von der Audi AG für verschiedene Fahrzeugmodelle angebotene prädiktive Effizienzassistent (PEA) nutzt des Weiteren geografische Daten sowie Umfelddaten etwa in Form von Verkehrszeichen im Rekuperationsbetrieb der elektrischen Maschine. Beispielsweise kann eine bevorstehende Bergabfahrt des Kraftfahrzeugs zum Rekuperieren genutzt werden oder ein erforderliches Verlangsamen des Kraftfahrzeugs an einer Ampel oder dergleichen. Wird vom Fahrer zudem ein vorbestimmter Fahrmodus ausgewählt, so ist das Rekuperationsverhalten fest vorgegeben.

Als nachteilig ist hierbei der Umstand anzusehen, dass eine vorwiegend am Wirkungsgrad der elektrischen Maschine beim Rekuperieren orientierte Betriebsstrategie des Kraftfahrzeugs nicht immer sinnvoll ist. Es kann nämlich beispielsweise der Fall eintreten, dass aufgrund des Rekuperationsbetriebs der elektrischen Maschine diese anschließend nicht die gewünschte Leistung abgeben kann.

Aufgabe der vorliegenden Erfindung ist es daher, ein Verfahren und ein Kraftfahrzeug der eingangs genannten Art zu schaffen, welches eine besonders große Flexibilität beim Rekuperieren ermöglicht.

Diese Aufgabe wird durch ein Verfahren mit den Merkmalen des Patentanspruchs 1 und durch ein Kraftfahrzeug mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Betreiben eines Kraftfahrzeugs wird wenigstens eine zum Antreiben des Kraftfahrzeugs ausgebildete elektrische Maschine zum Rekuperieren von elektrischer Energie genutzt. Hierbei wird eine Fahrt des Kraftfahrzeugs während eines bevorstehenden Zeitraums berücksichtigt. Des Weiteren wird beim Nutzen der wenigstens einen elektrischen Maschine zum Rekuperieren der elektrischen Energie berücksichtigt, ob aufgrund einer thermischen Belastung der wenigstens einen elektrischen Maschine in dem bevorstehenden Zeitraum eine Verringerung der von der wenigstens einen elektrischen Maschine abgebbaren Antriebsleistung für das Kraftfahrzeug zu erwarten ist. Wenn dies der Fall ist, rekuperiert die wenigstens eine elektrische Maschine während eines Verzögerns des Kraftfahrzeugs eine Menge an elektrischer Energie, welche geringer ist als die während des Verzögerns mittels der wenigstens einen elektrischen Maschine rekuperierbare Menge an elektrischer Energie. Mit anderen Worten wird also dann nicht maximal rekuperiert, wenn das Rekuperieren dazu führt, dass die elektrische Maschine in dem bevorstehenden Zeitraum nicht die Leistung abgeben kann, welche sie in dem Zeitraum abgeben sollte. Die Rekuperationsstrategie ist also nicht fest vorgegeben, sondern besonders flexibel.

Dem liegt die Erkenntnis zugrunde, dass es nachteilig ist, wenn eine vorhersagbare Rückmeldung der elektrischen Maschine im Hinblick auf die thermische Auslastung in der Rekuperationsstrategie nicht berücksichtigt wird. Das, insbesondere aktive, Verringern der von der elektrischen Maschine abgebbaren Leistung wird auch als Derating bezeichnet. Ein derartiges Derating kann vorliegend besonders weitgehend vermieden werden. Dadurch wird der Betriebsstrang optimal genutzt, wobei insbesondere Fahrerpräferenzen berücksichtigt werden können. Des Weiteren ist es im Hinblick auf die Lebensdauer der elektrischen Maschine vorteilhaft, die Rekuperationsstrategie nicht allein davon abhängig zu machen, dass möglichst viel elektrische Energie rekuperiert wird. Denn eine solche Rekuperationsstrategie erhöht die thermische Belastung der elektrischen Maschine. Dies kann sich wiederum negativ auf die Lebensdauer der elektrischen Maschine auswirken.

Des Weiteren ist eine lediglich im Hinblick auf den Wirkungsgrad optimierte Rekuperation nicht sinnvoll, weil so Antrieb und Generatorbetrieb der elektrischen Maschine getrennt voneinander betrachtet werden. Die Rekuperation kann jedoch zu einem Derating der wenigstens einen elektrischen Maschine führen, obwohl ein Fahrer des Kraftfahrzeugs die Leistung der wenigstens einen elektrischen Maschine bei einem anschließenden Beschleunigen abrufen möchte. Bei einer im Hinblick auf die Leistung klein dimensionierten elektrischen Maschine und bei einem entsprechend dimensionierten elektrischen Energiespeicher des Kraftfahrzeugs kann dieses Problem bereits im Normalbetrieb auftreten. Ist der Triebstrang des Kraftfahrzeugs im Hinblick auf die Leistung der wenigstens einen elektrischen Maschine und/oder des elektrischen Energiespeichers größer dimensioniert, so tritt dieses Problem vor allem bei sportlicher Fahrweise auf. Vorliegend können derartige Probleme jedoch vermieden werden, da im Hinblick auf die Rekuperationsstrategie die Fahrt des Kraftfahrzeugs während des bevorstehenden Zeitraums berücksichtigt wird.

Auf diese Weise lässt sich eine maximale Effizienz während der Rekuperation unter Berücksichtigung aller prädiktiven Zustände erreichen. Beispielsweise können das thermische Verhalten des Antriebsstrangs, ein Fahrerwunsch, ein Zustand des elektrischen Energiespeichers des Kraftfahrzeugs sowie geografische Daten und/oder Umgebungsdaten beziehungsweise Umweltparameter in dem bevorstehenden Zeitraum berücksichtigt werden. Durch das intelligente Vermeiden einer unerwünscht großen thermischen Belastung der wenigstens einen elektrischen Maschine kann zwar der Fall auftreten, dass die elektrische Maschine weniger elektrische Energie rekuperiert als theoretisch während des Verzögerns des Kraftfahrzeugs möglich wäre. Jedoch wird dadurch die elektrische Maschine geschont, und die vorübergehende Einbuße beim Rekuperieren der elektrischen Energie kann über die Lebensdauer der elektrischen Maschine hinweg kompensiert werden.

Zum Verzögern des Kraftfahrzeugs wird ein Rekuperationsmoment in Abhängigkeit davon zumindest auf eine erste elektrische Maschine und eine zweite elektrische Maschine ungleichmäßig aufgeteilt, welche Leistung die jeweilige elektrische Maschine in dem Zeitraum zum Antreiben des Kraftfahrzeugs abzugeben hat. Es kann also beispielsweise diejenige elektrische Maschine weniger stark rekuperieren, welche anschließend, also in dem bevorstehenden Zeitraum, eine besonders große Antriebsleistung zur Verfügung stellen soll. Demgegenüber ist bei derjenigen elektrischen Maschine, welche in dem Zeitraum nicht oder in geringerem Maße zum Bereitstellen von Antriebsleistung benötigt wird, ein Verringern der Menge an rückzugewinnender elektrischer Energie in geringerem Maße erforderlich. So können die wenigstens zwei elektrischen Maschinen besonders effizient sowohl zum Rekuperieren als auch zum Antreiben des Kraftfahrzeugs eingesetzt werden.

Hierbei hat es sich als vorteilhaft gezeigt, wenn von den wenigstens zwei elektrischen Maschinen diejenige mit dem größeren Rekuperationsmoment beaufschlagt wird, welche im Hinblick auf das Rekuperieren der elektrischen Energie den geringeren Wirkungsgrad aufweist. Würde nämlich alleine im Hinblick auf die Energieeffizienz stets diejenige elektrische Maschine mit dem grö-ßeren Rekuperationsmoment beaufschlagt, welche den größeren Wirkungsgrad aufweist, so kann der Fall eintreten, dass genau diese elektrische Maschine dann zum Bereitstellen von Antriebsleistung für das Kraftfahrzeug in dem bevorstehenden Zeitraum nicht beziehungsweise in einem geringeren Ausmaß zur Verfügung steht. Dies kann vorliegend verhindert werden. Dementsprechend ist auch dies einer im Hinblick auf die Leistungsabgabe effizienten Nutzung der wenigstens zwei elektrischen Maschinen zuträglich.

Vorzugsweise wird beim Nutzen der wenigstens einen elektrischen Maschine zum Rekuperieren der elektrischen Energie ein von dem Fahrer des Kraftfahrzeugs ausgewählter Fahrmodus berücksichtigt. Beispielsweise kann vorgesehen sein, dass zum Auswählen ein sportlicher Fahrmodus, ein effizienter Fahrmodus, ein komfortabler Fahrmodus und dergleichen zur Verfügung stehen. Wenn der Fahrer nun etwa den sportlichen Fahrmodus ausgewählt hat, so ist davon auszugehen, dass in dem bevorstehenden Zeitraum die elektrische Maschine häufiger eine große Leistung abzugeben hat als dies der Fall ist, wenn der Fahrer den effizienten Fahrmodus ausgewählt hat. Es kann also das vom Fahrerwunsch abhängige thermische Verhalten der elektrischen Maschine bei der Rekuperationsstrategie berücksichtigt werden. Die Leistungsaufnahme und Leistungsabgabe der Nutzer beziehungsweise Komponenten des Triebstrangs kann so optimal im Sinne der Präferenz des Fahrers in dem Prädiktionszeitraum auf die Komponenten verteilt werden. Durch das Auswählen des Fahrmodus gibt nämlich der Fahrer eine bevorzugte Gewichtung dieser Komponenten beziehungsweise Triebstrangnutzer etwa in Form der elektrischen Maschine als Optimierungsproblem an.

Als weiter vorteilhaft hat es sich gezeigt, wenn beim Nutzen der wenigstens einen elektrischen Maschine zum Rekuperieren der elektrischen Energie ein Fahrverhalten eines Fahrers des Kraftfahrzeugs berücksichtigt wird. Wird also beispielsweise festgestellt, dass während der bisherigen Fahrt des Kraftfahrzeugs, also in einem Zeitraum vor dem bevorstehenden Zeitraum, der Fahrer häufig nach einer Kurve beschleunigt oder überhaupt in bestimmten Situationen besonders viel Leistung der elektrischen Maschine abrufen möchte, dann kann das Rekuperieren der elektrischen Energie mittels der wenigstens einen elektrischen Maschine eingeschränkt werden. Dann steht nämlich die Leistung der elektrischen Maschine für das häufig gewünschte Beschleunigen uneingeschränkt zur Verfügung. Es können also Daten aus der Vergangenheit, welche die Gewohnheit des Fahrers im Hinblick auf sein Fahrverhalten beschreiben, ausgewertet und somit sinnvoll genutzt werden.

Weil das Kraftfahrzeug wenigstens zwei elektrische Maschinen aufweist, kann auch die Verteilung der von der jeweiligen elektrischen Maschine zu rekuperierenden elektrischen Energie vom Fahrverhalten des Fahrers und/oder vom ausgewählten Fahrmodus abhängig gemacht werden. Dies gilt beispielsweise, wenn bei einem Herausbeschleunigen aus einer Kurve die einem kurvenäu-ßeren Rad des Kraftfahrzeugs zugeordnete elektrische Maschine eine grö-ßere Leistung aufbringen soll als die einem kurveninneren Rad zugeordnete elektrische Maschine. Um die entsprechende elektrische Leistung bereitzustellen, kann bereits die Rekuperation der jeweiligen elektrischen Maschine im Hinblick auf die bevorstehende Leistungsanforderung entsprechend gesteuert beziehungsweise geregelt werden.

Vorzugsweise wird beim Benutzen der wenigstens einen elektrischen Maschine zum Rekuperieren der elektrischen Energie wenigstens ein Umweltparameter berücksichtigt. Beispielsweise haben nämlich Umweltparameter wie die Umgebungstemperatur und/oder die Windstärke einen Einfluss auf die thermische Belastung der elektrischen Maschine. Werden daher derartige Umweltparameter berücksichtigt, welche einen Einfluss auf die thermische Belastung der elektrischen Maschine haben, so lässt sich eine besonders weit gehende Rekuperation der elektrischen Energie erreichen, ohne dass Einbu-ßen im Hinblick auf die abzugebende Leistung der wenigstens einen elektrischen Maschine auftreten.

Vorzugsweise wird beim Nutzen der wenigstens einen elektrischen Maschine zum Rekuperieren der elektrischen Energie eine aktuelle geografische Position des Kraftfahrzeugs und/oder wenigstens eine geografische Position des Kraftfahrzeugs während des bevorstehenden Zeitraums berücksichtigt. Beispielsweise spielt es nämlich eine Rolle für das Rekuperieren und für die zu erwartende Leistungsabgabe der wenigstens einen elektrischen Maschine in dem bevorstehenden Zeitraum, ob sich das Kraftfahrzeug aktuell beziehungsweise während des Zeitraums in einem ebenen oder einem mehr oder weniger starke Gefälle und Steigungen aufweisenden Gebiet befindet. Denn bei Steigungen ist damit zu rechnen, dass in dem Zeitraum von der wenigstens einen elektrischen Maschine häufiger eine vergleichsweise hohe Leistungsabgabe gefordert werden wird. Durch das Berücksichtigen der geografischen Position des Kraftfahrzeugs kann somit dafür gesorgt werden, dass in dem bevorstehenden Zeitraum die wenigstens eine elektrische Maschine stets die gewünschte Leistung zur Verfügung stellen kann.

In analoger Weise hat es sich als vorteilhaft gezeigt, wenn beim Nutzen der wenigstens einen elektrischen Maschine zum Rekuperieren der elektrischen Energie eine Beschaffenheit einer während des bevorstehenden Zeitraums von dem Kraftfahrzeug zurückzulegenden Strecke berücksichtigt wird. Beispielsweise können in Abhängigkeit von Kurvenradien der Strecke und/oder der Beschaffenheit der Fahrbahnoberfläche in dem Zeitraum unterschiedliche Beschleunigungen des Kraftfahrzeugs zu erwarten sein.

Von Vorteil ist es weiterhin, wenn beim Nutzen der wenigstens einen elektrischen Maschine zum Rekuperieren der elektrischen Energie ein Zustand eines elektrischen Energiespeichers des Kraftfahrzeugs berücksichtigt wird. Auch die thermische Belastung des elektrischen Energiespeichers hat nämlich dahingehend Auswirkungen, inwieweit dieser die rückgewonnene elektrische Energie aufnehmen und anschließend wieder abgeben kann. Durch das Berücksichtigen des Zustands des elektrischen Energiespeichers kann also einerseits sichergestellt werden, dass der Energiespeicher die rückgewonnene elektrische Energie tatsächlich aufnehmen kann. Zudem führt das Vermeiden einer unerwünschten thermischen Belastung des elektrischen Energiespeichers zu einer besonders langen Lebensdauer des elektrischen Energiespeichers.

Zum Verzögern des Kraftfahrzeugs kann eine Betriebsbremse des Kraftfahrzeugs eingesetzt werden. Durch den Einsatz einer solchen Betriebsbremse oder Reibbremse des Kraftfahrzeugs kann besonders einfach dafür gesorgt werden, dass die wenigstens eine elektrische Maschine eine gegenüber der maximal rekuperierbaren Menge an elektrischer Energie verringerte Menge der elektrischen Energie rückgewinnt und dennoch die erforderliche Verzögerung erreicht wird.

Schließlich hat es sich als vorteilhaft gezeigt, wenn beim Rekuperieren der elektrischen Energie von der wenigstens einen elektrischen Maschine abgegebene Wärme zum Aufheizen wenigstens eines elektrischen Energiespeichers des Kraftfahrzeugs verwendet wird. Insbesondere bei einem Kaltstart des Kraftfahrzeugs kann also die Rekuperationsstrategie so angepasst werden, dass der elektrische Energiespeicher besonders rasch aufgeheizt wird. Dann kann der elektrische Energiespeicher in dem bevorstehenden Zeitraum besonders gut elektrische Energie für die wenigstens eine elektrische Maschine zur Verfügung stellen, welche das Kraftfahrzeug antreibt.

Auch hier kann von den wenigstens zwei elektrischen Maschinen diejenige bevorzugt mit dem größeren Rekuperationsmoment beaufschlagt werden, welche im Hinblick auf das Rekuperieren der elektrischen Energie den geringeren Wirkungsgrad aufweist. Dann erfolgt nämlich das Aufheizen des elektrischen Energiespeichers besonders rasch.

Das erfindungsgemäße Kraftfahrzeug weist wenigstens eine zum Antreiben des Kraftfahrzeugs ausgebildete elektrische Maschine auf, welche zum Rekuperieren von elektrischer Energie nutzbar ist. Eine Steuerungseinrichtung des Kraftfahrzeugs dient dem Ansteuern der wenigstens einen elektrischen Maschine für ein Nutzen derselben zum Rekuperieren der elektrischen Energie. Die Steuerungseinrichtung ist dazu ausgebildet, eine Fahrt des Kraftfahrzeugs während eines bevorstehenden Zeitraums zu berücksichtigen. Die Steuerungseinrichtung ist des Weiteren dazu ausgebildet, beim Nutzen der wenigstens einen elektrischen Maschine zum Rekuperieren der elektrischen Energie zu berücksichtigen, ob aufgrund einer thermischen Belastung der wenigstens einen elektrischen Maschine in dem bevorstehenden Zeitraum eine Verringerung der von der wenigstens einen elektrischen Maschine abgebbaren Antriebsleistung für das Kraftfahrzeug zu erwarten ist. Darüber hinaus ist die Steuerungseinrichtung dazu ausgebildet, die wenigstens eine elektrische Maschine derart anzusteuern, dass die wenigstens eine elektrische Maschine während eines Verzögerns des Kraftfahrzeugs eine Menge an elektrischer Energie rekuperiert, welche geringer ist als die während des Verzögerns mittels der wenigstens einen elektrischen Maschine rekuperierbare Menge an elektrischer Energie. Die Steuerungseinrichtung ist dazu ausgebildet, zum Verzögern des Kraftfahrzeugs ein Rekuperationsmoment in Abhängigkeit davon zumindest auf eine erste elektrische Maschine und eine zweite elektrische Maschine ungleichmäßig aufzuteilen, welche Leistung die jeweilige elektrische Maschine in dem Zeitraum zum Antreiben des Kraftfahrzeugs abzugeben hat. Ein derartiges Kraftfahrzeug ermöglicht eine besonders große Flexibilität beim Rekuperieren der elektrischen Energie.

Die Steuerungseinrichtung des Kraftfahrzeugs weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des Kraftfahrzeugs, die Merkmale aufweisen, wie sie bereits im Zusammenhang mit den Weiterbildungen des Verfahrens beschrieben worden sind. Aus diesem Grund sind die entsprechenden Weiterbildungen des Kraftfahrzeugs hier nicht noch einmal beschrieben.

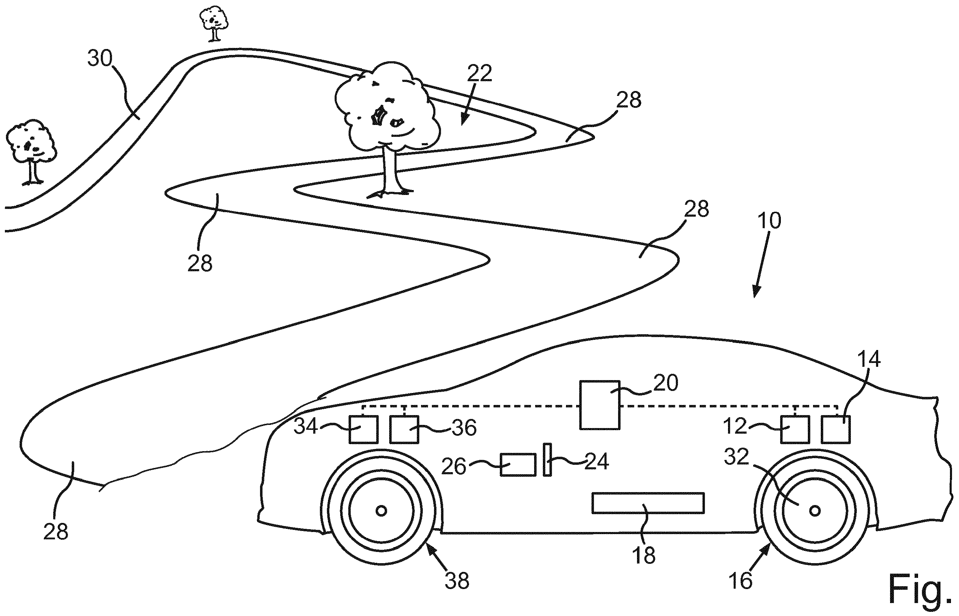

Im Folgenden ist ein Ausführungsbeispiel der Erfindung beschrieben. Hierzu zeigt die einzige Figur schematisch ein Kraftfahrzeug, welches zum Rekuperieren von elektrischer Energie ausgebildete elektrische Maschinen aufweist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Ein in der Figur schematisch gezeigtes Kraftfahrzeug 10 weist eine erste elektrische Maschine 12 und eine zweite elektrische Maschine 14 auf. Die elektrischen Maschinen 12, 14 sind zum Antreiben des Kraftfahrzeugs 10 ausgebildet. Beispielsweise kann die erste elektrische Maschine 12 einem linken Hinterrad 16 des Kraftfahrzeugs zugeordnet sein und die zweite elektrische Maschine 14 einem rechten Hinterrad des Kraftfahrzeugs 10.

Die beiden elektrischen Maschinen können auch zum Rekuperieren von elektrischer Energie genutzt werden. Hierbei werden die elektrischen Maschinen 12, 14 als Generatoren genutzt, welche die rückgewonnene elektrische Energie beispielsweise in einen elektrischen Energiespeicher 18 des Kraftfahrzeugs 10 einbringen. Ein Rekuperationsbetrieb der elektrischen Maschinen 12, 14 wird von einer Steuerungseinrichtung 20 vorgegeben. Die Steuerungseinrichtung 20 des Kraftfahrzeugs 10 berücksichtigt hierbei eine Fahrt des Kraftfahrzeugs 10 während eines bevorstehenden Zeitraums. Beispielsweise kann das Kraftfahrzeug 10 in dem bevorstehenden Zeitraum eine Strecke 22 befahren, welche in der Figur schematisch gezeigt ist.

Vorliegend berücksichtigt die Steuerungseinrichtung 20, ob aufgrund einer thermischen Belastung der elektrischen Maschinen 12, 14 in dem Zeitraum eine Verringerung der von den elektrischen Maschinen 12, 14 abgebbaren Leistung zu erwarten ist. Wenn dies der Fall ist, so rekuperiert zumindest eine der elektrischen Maschinen 12, 14 während eines Verzögerns des Kraftfahrzeugs 10 eine Menge an elektrischer Energie, welche geringer ist als die während des Verzögerns mittels der elektrischen Maschinen 12, 14 rekuperierbare Menge an elektrischer Energie. Es wird vorliegend das thermische Verhalten der Antriebskomponenten insbesondere in Form der elektrischen Maschinen 12, 14, jedoch auch des elektrischen Energiespeichers 18 bei der Rekuperation berücksichtigt.

Zudem kann der Fahrer des Kraftfahrzeugs 10 über eine vorliegend schematisch gezeigte Benutzerschnittstelle 24, etwa über einen Touchscreen und/oder einen Touchpad und/oder über einen Schalter, einen Fahrmodus des Kraftfahrzeugs 10 auswählen. Auch dieser Fahrmodus wird in der Rekuperationsstrategie berücksichtigt, welche die Steuerungseinrichtung 20 beim Ansteuern der elektrischen Maschinen 12, 14 zum Rekuperieren umsetzt.

Des Weiteren berücksichtigt die Steuerungseinrichtung 20 das bisherige Fahrverhalten des Fahrers des Kraftfahrzeugs 10. Zudem weist das Kraftfahrzeug 10 ein Navigationssystem 26 auf, mittels welchem sich die geografische Position des Kraftfahrzeugs 10 ermitteln lässt. Das Navigationssystem 26 kann der Steuerungseinrichtung 20 des Weiteren Daten, welche die in dem bevorstehenden Zeitraum zurückzulegende Strecke 22 betreffen, zur Verfügung stellen. So können beispielsweise ein Radius von Kurven 28 der Strecke 22, ein Streckenabschnitt 30 der Strecke 22 mit einem Gefälle, Steigungen, die jeweilige topografische Höhe und dergleichen von der Steuerungseinrichtung 20 prädiktiv berücksichtigt werden.

Die Berechnung der Höhe des Rekuperationsmoments der jeweiligen elektrischen Maschine 12, 14 und bei mehreren elektrischen Maschinen 12, 14 dessen Verteilung erfolgt vorliegend unter Prädiktion der gesamten Nutzung des Triebstrangs in einem Prädiktionszeitraum, also für den bevorstehenden Zeitraum. Insbesondere kann es sich bei diesem Prädiktionszeitraum um die gesamte Fahrt des Kraftfahrzeugs 10 von einem Startort zu einem Zielort handeln. Der von der Steuerungseinrichtung 20 eingestellte Rekuperationsbetrieb richtet sich also vorliegend nicht nur nach der verzögernden Wirkung des Triebstrangs. Vielmehr werden das Gesamtleistungspotential und das Lebensdauerpotential des Triebstrangs vorausschauend berücksichtigt. Hierbei werden alle Nutzer beziehungsweise Nutzfunktionen des Triebstrangs in dem Zeitraum berücksichtigt. Zu diesen Nutzfunktionen gehören beispielsweise der Antrieb, welchen die elektrischen Maschinen 12, 14 bereitstellen, die Rekuperation elektrischer Energie mittels der elektrischen Maschinen 12, 14 und eine Drehmomentenverteilung auf die beiden elektrischen Maschinen 12, 14.

In dem bevorstehenden Zeitraum oder Prädiktionszeitraum wird insbesondere das Zusammenspiel aller Nutzer des Triebstrangs unter Einbeziehung eines Triebstrangmodells sowie von Umweltdaten beziehungsweise Umweltparametern, von Positionsdaten beziehungsweise die geografische Position des Kraftfahrzeugs 10 angebenden Daten und von vergangenheitsbezogenen Fahrerdaten optimiert. Über das Triebstrangmodell kann die Steuerungseinrichtung 20 etwa abschätzen, ob beim Herausbeschleunigen aus einer der Kurven 28 auf der Strecke 22 aufgrund einer thermischen Belastung zumindest einer der elektrischen Maschinen 12, 14 mit einer Reduktion der von der elektrischen Maschine 12, 14 abgebbaren Leistung zu rechnen ist. Auf dieses Derating haben auch Umweltparameter wie beispielsweise die Umgebungstemperatur einen Einfluss. Des Weiteren spielen die Kurvenradien, Steigungen und das Gefälle der Strecke 22 sowie die topografische Höhe eine Rolle.

Durch die Berücksichtigung dieser Parameter kann das Potential des Triebstrangs optimal genutzt werden. Hierbei wird die Präferenz des Fahrers berücksichtigt, wofür der von dem Fahrer ausgewählte Fahrmodus sowie das Fahrverhalten des Fahrers von der Steuerungseinrichtung 20 ausgewertet werden. Des Weiteren können Einschränkungen der maximalen elektromotorischen Leistungen der elektrischen Maschinen 12, 14 im Hinblick auf die Lebensdauer des Triebstrangs berücksichtigt werden.

Vorliegend wird beispielsweise die Rekuperation bei einem drohenden Derating, also bei einer Leistungsreduktion aufgrund der thermischen Belastung einer der elektrischen Maschinen 12, 14, frühzeitig auf die andere elektrische Maschine 12, 14 umverteilt. Des Weiteren kann die Rekuperation eingeschränkt werden, wenn in Kürze, also etwa beim Herausbeschleunigen aus einer der Kurven 28 der Strecke 22, ein Boostvorgang gewünscht wird, also eine starke, durch die elektrischen Maschinen 12, 14 bewirkte oder unterstützte Beschleunigung des Kraftfahrzeugs 10. Würde hingegen die Steuerungseinrichtung 20 bei der Rekuperationsstrategie lediglich berücksichtigen, dass die elektrischen Maschinen 12, 14 maximal viel elektrische Energie rückgewinnen, so würde dies zu einem Derating der elektrischen Maschinen 12, 14 führen. Entsprechend könnte dann kein solches Beschleunigen des Kraftfahrzeugs 10 stattfinden.

Bei einem Triebstrang mit nur einer elektrischen Maschine 12 kann der Anteil an der Verzögerung des Kraftfahrzeugs 10, welcher nicht von der elektrischen Maschine 12 bewirkt wird, durch eine Betriebsbremse 32 des Kraftfahrzeugs 10 bewirkt werden, welche vorliegend schematisch gezeigt ist.

Als Nutzer des Triebstrangs werden insbesondere die Rekuperation, der Antrieb beziehungsweise Vortrieb und die Querdynamik bei der Drehmomentverteilung (also dem sogenannten torque vectoring) auf die beiden elektrischen Maschinen 12, 14 berücksichtigt. Die Entscheidungsfindung zwischen einer möglichst großen Reichweite des Kraftfahrzeugs 10 und damit einhergehend einer möglichst großen Rekuperation durch die elektrischen Maschinen 12, 14 oder einer größeren Dynamik beim Durchfahren der Strecke 22 beruht neben den bereits einfließenden Daten zusätzlich auf dem parallel mitlaufenden, prädiktiven Modell des Triebstranges beziehungsweise Antriebsstrangs und dem tatsächlichen Fahrverhalten des Fahrers.

Beispielsweise werden Gewohnheiten des Fahrers berücksichtigt wie ein Beschleunigen nach Kurven 28 und dergleichen Daten aus dem bisherigen Fahrverhalten des Fahrers. Wenn der Fahrer also in bestimmten Situationen häufig stark beschleunigen oder boosten möchte, dann wird die Rekuperation der elektrischen Maschinen 12, 14 eingeschränkt, oder es werden die Rekuperationsmomente anders auf die elektrische Maschinen 12, 14 aufgeteilt. Des Weiteren fließen die Positionsdaten beziehungsweise die geografische Position des Kraftfahrzeugs 10 angebende Daten sowie Topografiedaten mit ein, und die Fahrt auf der Strecke 22 wird vorausschauend berücksichtigt.

Wenn, wie vorliegend gezeigt, die wenigstens zwei elektrischen Maschinen 12, 14 vorhanden sind, so kann beispielsweise die vom Wirkungsgrad her schlechtere elektrische Maschine 12 für die Rekuperation genutzt werden, wenn anschließend die andere elektrische Maschine 14 für eine Traktion beim Beschleunigen benötigt wird.

Die Optimierungskriterien sind also insbesondere in Summe der Fahrerwunsch, die Effizienz des Triebstrangs sowie die prädiktive Leistungsfähigkeit des Triebstrangs. Des Weiteren spielen das Modell des Triebstrangs eine Rolle sowie das Abkühlverhalten der elektrischen Maschinen 12, 14 sowie des elektrischen Energiespeichers 18. Es wird also das prognostizierte thermische Verhalten der Antriebskomponenten inklusive des elektrischen Energiespeichers 18 berücksichtigt. Ein daraus abgeleitetes Vermeiden von Leistungsbegrenzungen sorgt für eine optimale Nutzung des Triebstrangs. Des Weiteren kann der Energieerhalt der Batterie beziehungsweise des elektrischen Energiespeichers 18 berücksichtigt werden.

Auch die Aufheizstrategie des Triebstrangs kann zu einer Anpassung des Rekuperationsverhaltens des Kraftfahrzeugs 10 führen, insbesondere nach einem Kaltstart, also bei einer Kaltabfahrt des Kraftfahrzeugs 10. Beispielsweise kann bewusst die elektrische Maschine 12, 14 mit dem schlechteren Wirkungsgrad zum Rekuperieren genutzt werden, um den elektrischen Energiespeicher 18 besonders rasch aufzuheizen.

Auch hierbei wird jedoch bevorzugt der vom Fahrer des Kraftfahrzeugs 10 gewählte Fahrmodus berücksichtigt. Beispielsweise erfolgt das Aufheizen des elektrischen Energiespeichers 18 beim Auswählen eines effizienten Fahrmodus langsamer als beim Auswählen eines sportlichen Fahrmodus. Denn im sportlichen Fahrmodus soll der elektrische Energiespeicher 18 besonders rasch eine besonders große Menge an elektrischer Energie für die elektrischen Maschinen 12, 14 bereitstellen können.

Bei dem Kraftfahrzeug 10 kann es sich insbesondere um ein Elektrofahrzeug oder um ein Hybridfahrzeug handeln. Das Kraftfahrzeug 10 kann des Weiteren zwei weitere elektrische Maschine 34, 36 aufweisen, welche im Bereich einer Vorderachse des Kraftfahrzeugs 10 angeordnet sind. Dementsprechend kann die elektrische Maschine 34 einem linken Vorderrad 38 des Kraftfahrzeugs 10 zugeordnet sein und die elektrische Maschine 36 einem rechten Vorderrad des Kraftfahrzeugs 10. Für die Ansteuerung dieser elektrischen Maschinen 34, 36 mittels der Steuerungseinrichtung 20 gilt das für die elektrischen Maschinen 12, 14 Ausgeführte in analoger Weise.

Insgesamt zeigt das Beispiel, wie durch die Erfindung eine situationsgerechte Rekuperation unter Berücksichtigung des Fahrerwunsches und eines prognostizierten Triebstrangleistungspotentials und Lebensdauerpotentials erreicht werden kann.

## Patentansprüche

1. Verfahren zum Betreiben eines Kraftfahrzeugs (10), bei welchem wenigstens eine zum Antreiben des Kraftfahrzeugs (10) ausgebildete elektrische Maschine (12, 14) zum Rekuperieren von elektrischer Energie genutzt wird, und bei welchem eine Fahrt des Kraftfahrzeugs (10) während eines bevorstehenden Zeitraums berücksichtigt wird,
wobei beim Nutzen der wenigstens einen elektrischen Maschine (12, 14) zum Rekuperieren der elektrischen Energie berücksichtigt wird, ob aufgrund einer thermischen Belastung der wenigstens einen elektrischen Maschine (12, 14) in dem bevorstehenden Zeitraum eine Verringerung der von der wenigstens einen elektrischen Maschine (12, 14) abgebbaren Antriebsleistung für das Kraftfahrzeug (10) zu erwarten ist, wobei die wenigstens eine elektrische Maschine (12, 14) während eines Verzögerns des Kraftfahrzeugs (10) eine Menge an elektrischer Energie rekuperiert, welche geringer ist als die während des Verzögerns mittels der wenigstens einen elektrischen Maschine (12, 14) rekuperierbare Menge an elektrischer Energie,
**dadurch gekennzeichnet, dass**
zum Verzögern des Kraftfahrzeugs (10) ein Rekuperationsmoment in Abhängigkeit davon zumindest auf eine erste elektrische Maschine (12) und eine zweite elektrische Maschine (14) ungleichmäßig aufgeteilt wird, welche Leistung die jeweilige elektrische Maschine (12, 14) in dem Zeitraum zum Antreiben des Kraftfahrzeugs (10) abzugeben hat.

2. Verfahren nach Anspruch 1,
**dadurch gekennzeichnet, dass**
beim Nutzen der wenigstens einen elektrischen Maschine (12, 14) zum Rekuperieren der elektrischen Energie ein von einem Fahrer des Kraftfahrzeugs (10) ausgewählter Fahrmodus berücksichtigt wird.

3. Verfahren nach einem der vorhergehenden Ansprüche,
**dadurch gekennzeichnet, dass**
beim Nutzen der wenigstens einen elektrischen Maschine (12, 14) zum Rekuperieren der elektrischen Energie ein Fahrverhalten eines Fahrers des Kraftfahrzeugs (10) berücksichtigt wird.

4. Verfahren nach einem der vorhergehenden Ansprüche,
**dadurch gekennzeichnet, dass**
beim Nutzen der wenigstens einen elektrischen Maschine (12, 14) zum Rekuperieren der elektrischen Energie wenigstens ein Umweltparameter berücksichtigt wird.

5. Verfahren nach einem der vorhergehenden Ansprüche,
**dadurch gekennzeichnet, dass**
beim Nutzen der wenigstens einen elektrischen Maschine (12, 14) zum Rekuperieren der elektrischen Energie eine aktuelle geografische Position des Kraftfahrzeugs (10) und/oder wenigstens eine geografische Position des Kraftfahrzeugs (10) während des bevorstehenden Zeitraums und/oder eine Beschaffenheit einer während des bevorstehenden Zeitraums von dem Kraftfahrzeug (10) zurückzulegenden Strecke (22) berücksichtigt wird.

6. Verfahren nach einem der vorhergehenden Ansprüche,
**dadurch gekennzeichnet, dass**
beim Nutzen der wenigstens einen elektrischen Maschine (12, 14) zum Rekuperieren der elektrischen Energie ein Zustand eines elektrischen Energiespeichers (18) des Kraftfahrzeugs (10) berücksichtigt wird.

7. Verfahren nach einem der vorhergehenden Ansprüche,
**dadurch gekennzeichnet, dass**
zum Verzögern des Kraftfahrzeugs (10) eine Betriebsbremse (32) des Kraftfahrzeugs (10) eingesetzt wird.

8. Verfahren nach einem der vorhergehenden Ansprüche,
**dadurch gekennzeichnet, dass**
von den wenigstens zwei elektrischen Maschinen (12, 14) diejenige mit dem größeren Rekuperationsmoment beaufschlagt wird, welche im Hinblick auf das Rekuperieren der elektrischen Energie den geringeren Wirkungsgrad aufweist.

9. Verfahren nach einem der vorhergehenden Ansprüche,
**dadurch gekennzeichnet, dass**
beim Rekuperieren der elektrischen Energie von der wenigstens einen elektrischen Maschine (12, 14) abgegebene Wärme zum Aufheizen wenigstens eines elektrischen Energiespeichers (18) des Kraftfahrzeugs (10) verwendet wird.

10. Kraftfahrzeug mit wenigstens einer zum Antreiben des Kraftfahrzeugs (10) ausgebildeten elektrische Maschine (12, 14), welche zum Rekuperieren von elektrischer Energie nutzbar ist, und mit einer Steuerungseinrichtung (20) zum Ansteuern der wenigstens einen elektrischen Maschine (12, 14) für ein Nutzen derselben zum Rekuperieren der elektrischen Energie, wobei die Steuerungseinrichtung (20) dazu ausgebildet ist, eine Fahrt des Kraftfahrzeugs (10) während eines bevorstehenden Zeitraums zu berücksichtigen,
wobei die Steuerungseinrichtung (20) dazu ausgebildet ist, beim Nutzen der wenigstens einen elektrischen Maschine (12, 14) zum Rekuperieren der elektrischen Energie zu berücksichtigen, ob aufgrund einer thermischen Belastung der wenigstens einen elektrischen Maschine (12, 14) in dem bevorstehenden Zeitraum eine Verringerung der von der wenigstens einen elektrischen Maschine (12, 14) abgebbaren Antriebsleistung für das Kraftfahrzeug (10) zu erwarten ist, und dazu, die wenigstens eine elektrische Maschine (12, 14) derart anzusteuern, dass die wenigstens eine elektrische Maschine (12, 14) während eines Verzögerns des Kraftfahrzeugs (10) eine Menge an elektrischer Energie rekuperiert, welche geringer ist als die während des Verzögerns mittels der wenigstens einen elektrischen Maschine (12, 14) rekuperierbare Menge an elektrischer Energie,
**dadurch gekennzeichnet, dass**
die Steuerungseinrichtung (20) dazu ausgebildet ist, zum Verzögern des Kraftfahrzeugs (10) ein Rekuperationsmoment in Abhängigkeit davon zumindest auf eine erste elektrische Maschine (12) und eine zweite elektrische Maschine (14) ungleichmäßig aufzuteilen, welche Leistung die jeweilige elektrische Maschine (12, 14) in dem Zeitraum zum Antreiben des Kraftfahrzeugs (10) abzugeben hat.

## Claims

1. Method for operating a motor vehicle (10), in which at least one electrical machine (12, 14) configured for operating the motor vehicle (10) is used for recuperating electrical energy, and in which a journey of the motor vehicle (10) during a future period of time is taken into consideration,
wherein when using the at least one electrical machine (12, 14) for recuperating electrical energy, it is taken into consideration whether for reasons of a thermal load on the at least one electrical machine (12, 14) in the future period of time a reduction in the drive performance of the motor vehicle (10) which can be provided by the at least one electrical machine (12, 14) is to be expected, wherein the at least one electrical machine (12, 14) recuperates a quantity of electrical energy during a deceleration of the motor vehicle (10) which is less than the quantity of electrical energy which can be recuperated during the deceleration by means of the at least one electrical machine (12, 14),
**characterized in that**
for decelerating the motor vehicle (10) a recuperation moment as a function thereof is distributed unevenly at least onto a first electrical machine (12) and a second electrical machine (14), which power the respective electrical machine (12, 14) is to output in the period of time for driving the motor vehicle.

2. Method according to claim 1,
**characterized in that**
when using the at least one electrical machine (12, 14) for recuperating the electrical energy a drive mode selected by a driver of the motor vehicle (10) is taken into consideration.

3. Method according to any of the preceding claims,
**characterized in that**
when using the at least one electrical machine (12, 14) for recuperating the electrical energy a driving behavior of a driver of the motor vehicle (10) is taken into consideration.

4. Method according to any of the preceding claims,
**characterized in that**
when using the at least one electrical machine (12, 14) for recuperating the electrical energy, at least one environmental parameter is taken into consideration.

5. Method according to any of the preceding claims,
**characterized in that**
when using the at least one electrical machine (12, 14) for recuperating the electrical energy, a current geographic position of the motor vehicle (10) and/or at least one geographic position of the motor vehicle (10) during the future period of time and/or a characteristic of a route (22) to be covered by the motor vehicle (10) during the future period of time is taken into consideration.

6. Method according to any of the preceding claims,
**characterized in that**
when using the at least one electrical machine (12, 14) for recuperating the electrical energy, a state of an electrical energy store (18) of the motor vehicle (10) is taken into consideration.

7. Method according to any of the preceding claims,
**characterized in that**
for decelerating the motor vehicle (10) an operating brake (32) of the motor vehicle (10) is employed.

8. Method according to any of the preceding claims,
**characterized in that**
of the at least two electrical machines (12, 14), the greatest recuperation moment is supplied to the one which in respect of the recuperation of the electrical energy has the lowest degree of effectiveness.

9. Method according to any of the preceding claims,
**characterized in that**
when recuperating the electrical energy, heat output from the at least one electrical machine (12, 14) is used for heating at least one electrical energy store (18) of the motor vehicle (10).

10. Motor vehicle having at least one electrical machine (12, 14) configured for driving the motor vehicle (10), which electrical machine (12, 14) can be used for recuperating electrical energy, and having a control apparatus (20) for controlling the at least one electrical machine (12, 14) for a use thereof for recuperating the electrical energy, wherein the control apparatus (20) is configured to take into consideration a journey of the motor vehicle (10) during a future period of time,
wherein the control apparatus (20) is configured, when using the at least one electrical machine (12, 14) for recuperating the electrical energy, to take into consideration whether, for reasons of a thermal load of the at least one electrical machine (12, 14) in the future period of time, a reduction in the drive performance of the motor vehicle (10) which can be provided by the at least one electrical machine (12, 14) is to be expected, and in this regard to control the at least one electrical machine (12, 14) such that the at least one electrical machine (12, 14) recuperates a quantity of electrical energy during a deceleration of the motor vehicle (10) which is less than the quantity of electrical energy which can be recuperated during the deceleration by means of the at least one electrical machine (12, 14),
**characterized in that**
the control apparatus (20) is configured, in order to decelerate the motor vehicle (10), to distribute a recuperation moment as a function thereof unevenly at least onto a first electrical machine (12) and a second electrical machine (14), which power the respective electrical machine (12, 14) is to output in the period of time for driving the motor vehicle (10).

## Revendications

1. Procédé de fonctionnement d'un véhicule automobile (10), pour lequel au moins une machine électrique (12, 14) conçue pour entraîner le véhicule automobile (10) est utilisée pour récupérer de l'énergie électrique, et pour lequel un trajet du véhicule automobile (10) est pris en compte pendant une période à venir,
dans lequel, lors de l'utilisation de la au moins une machine électrique (12, 14) pour récupérer l'énergie électrique, il est pris en compte si, pour des raisons de charge thermique de la au moins une machine électrique (12, 14) au cours de la période à venir, une diminution de la puissance d'entraînement pouvant être fournie par la au moins une machine électrique (12, 14) est à prévoir pour le véhicule automobile (10), dans lequel la au moins une machine électrique (12, 14) récupère une quantité d'énergie électrique pendant une décélération du véhicule automobile (10) qui est inférieure à la quantité d'énergie électrique pouvant être récupérée pendant la décélération au moyen de la au moins une machine électrique (12, 14),
**caractérisé en ce que**
pour décélérer le véhicule automobile (10), un couple de récupération est réparti inégalement entre au moins une première machine électrique (12) et une seconde machine électrique (14) en fonction de la puissance que la machine électrique (12, 14) respective doit fournir au cours de la période pour entraîner le véhicule automobile (10).

2. Procédé selon la revendication 1,
**caractérisé en ce que**
lors de l'utilisation de la au moins une machine électrique (12, 14), un mode de conduite sélectionné par un conducteur du véhicule automobile (10) est pris en compte pour récupérer l'énergie électrique.

3. Procédé selon l'une quelconque des revendications précédentes,
**caractérisé en ce que**
lors de l'utilisation de la au moins une machine électrique (12, 14), un comportement de conduite d'un conducteur du véhicule automobile (10) est pris en compte pour récupérer l'énergie électrique.

4. Procédé selon l'une quelconque des revendications précédentes,
**caractérisé en ce que**
lors de l'utilisation de la au moins une machine électrique (12, 14), un paramètre environnemental est pris en compte pour récupérer l'énergie électrique.

5. Procédé selon l'une quelconque des revendications précédentes,
**caractérisé en ce que**
lors de l'utilisation de la au moins une machine électrique (12, 14), une position géographique actuelle du véhicule automobile (10) et/ou au moins une position géographique du véhicule automobile (10) pendant la période à venir et/ou une caractéristique de la route (22) à parcourir par le véhicule automobile (10) pendant la période à venir est(sont) prise(s) en compte pour récupérer l'énergie électrique.

6. Procédé selon l'une quelconque des revendications précédentes,
**caractérisé en ce que**
lors de l'utilisation de la au moins une machine électrique (12, 14), un état d'un dispositif de stockage d'énergie électrique (18) du véhicule automobile (10) est pris en compte pour récupérer l'énergie électrique.

7. Procédé selon l'une quelconque des revendications précédentes,
**caractérisé en ce que**
lors de la décélération du véhicule automobile (10), un frein de service (32) du véhicule automobile (10) est utilisé.

8. Procédé selon l'une quelconque des revendications précédentes,
**caractérisé en ce que**
parmi les au moins deux machines électriques (12, 14), le couple de récupération le plus important est fourni à celle qui présente le rendement le plus faible par rapport à la récupération de l'énergie électrique.

9. Procédé selon l'une quelconque des revendications précédentes,
**caractérisé en ce que**
lors de la récupération de l'énergie électrique, de la chaleur fournie par la au moins une machine électrique (12, 14) est utilisée pour chauffer au moins un dispositif de stockage d'énergie électrique (18) du véhicule automobile (10).

10. Véhicule automobile avec au moins une machine électrique (12, 14) conçue pour entraîner le véhicule automobile (10) qui peut être utilisée pour récupérer de l'énergie électrique, et avec un dispositif de commande (20) pour commander la au moins une machine électrique (12, 14) pour une utilisation de celle-ci afin de récupérer l'énergie électrique, dans lequel le dispositif de commande (20) est conçu pour prendre en compte un trajet du véhicule automobile (10) pendant une période à venir,
dans lequel le dispositif de commande (20) est conçu pour, lors de l'utilisation de la au moins une machine électrique (12, 14) pour récupérer l'énergie électrique, prendre en compte si, pour des raisons de charge thermique de la au moins une machine électrique (12, 14) au cours de la période à venir, une diminution de la puissance d'entraînement pouvant être fournie par la au moins une machine électrique (12, 14) est à prévoir pour le véhicule automobile (10), et pour commander la au moins une machine électrique (12, 14) de telle sorte que la au moins une machine électrique (12, 14) récupère une quantité d'énergie électrique pendant une décélération du véhicule automobile (10) qui est inférieure à la quantité d'énergie électrique pouvant être récupérée pendant la décélération au moyen de la au moins une machine électrique (12, 14),
**caractérisé en ce que**
le dispositif de commande (20) est conçu pour répartir inégalement un couple de récupération au moins entre une première machine électrique (12) et une seconde machine électrique (14) afin de décélérer le véhicule automobile (10) en fonction de la puissance que la machine électrique (12, 14) respective doit fournir au cours de la période pour entraîner le véhicule automobile (10).
